**Europäisches Patentamt**

**European Patent Office**

**Office européen des brevets**

(11) Veröffentlichungsnummer : **0 103 580**
**B1**

(12) # EUROPÄISCHE PATENTSCHRIFT .

(45) Veröffentlichungstag der Patentschrift :
19.08.87

(21) Anmeldenummer : 83900624.4

(22) Anmeldetag : 18.02.83

(86) Internationale Anmeldenummer :
PCT/DE 83/00033

(87) Internationale Veröffentlichungsnummer :
WO/8303230 (29.09.83 Gazette 83/23)

(51) Int. Cl.⁴ : **B 60 T    8/00, B 60 T 17/22**

(54) BREMSKRAFTREGELANLAGE.

(30) Priorität : 15.03.82 DE 3209314
13.07.82 DE 3226074

(43) Veröffentlichungstag der Anmeldung :
28.03.84 Patentblatt 84/13

(45) Bekanntmachung des Hinweises auf die Patenterteilung : 19.08.87 Patentblatt 87/34

(84) Benannte Vertragsstaaten :
AT BE CH DE FR GB LI LU NL SE

(56) Entgegenhaltungen :
EP-A- 0 045 253
CH-A-   585 631
DE-A- 1 901 467
DE-A- 2 204 092
FR-A- 1 544 007
FR-A- 1 591 432
FR-A- 2 235 818
FR-A- 2 396 675
FR-A- 2 413 244
FR-A- 2 436 049
GB-A- 1 018 548
GB-A- 1 457 377
GB-A- 2 053 394
GB-A- 2 053 394
NL-A- 7 104 704
US-A- 3 738 709
US-A- 4 131 325
US-A- 4 208 074

(73) Patentinhaber : ROBERT BOSCH GMBH
Postfach 50
D-7000 Stuttgart 1 (DE)

(72) Erfinder : ECKERT, Konrad
Günzelburgweg 29
D-7000 Stuttgart 30 (DE)
Erfinder : MAURER, Franz
Liegnitzer Strasse 27
D-7141 Schwieberdingen (DE)
Erfinder : MÜLLER, Egbert
Schillerstrasse 12
D-7147 Hochdorf (DE)
Erfinder : STUMPE, Werner
Goerdelerstrasse 10
D-7014 Kornwestheim (DE)

## Beschreibung

Die Erfindung geht aus von einer bekannten Bremskraftregelanlage nach der Gattung des Hauptanspruchs.

Es ist bekannt, bei fremd- oder hilfskraftbetätigten Bremsanlagen in Kraftfahrzeugen Bremsregler einzusetzen, die die Bremse in Abhängigkeit von bestimmten Fahrzustandsgrößen des Kraftfahrzeugs betätigen.

So ist es einmal bekannt, Lastgeber an den Achsen des Kraftfahrzeuges vorzusehen und mit den Gebersignalen eine lastabhängige Bremskraftregelung durchzuführen. Eine derartige Anlage ist beispielsweise in der DE-OS 20 57 973 beschrieben.

Es ist weiter bekannt, sogenannte Antiblockiersysteme (ABS) vorzusehen, die beim Blockieren der Räder des Kraftfahrzeuges auf glatter Fahrbahn einen Bremsdruck an den Rädern einsteuern, bei dem die Räder unmittelbar unterhalb der Blockiergrenze gehalten werden. Ein derartiges Antiblockiersystem ist beispielsweise in der DE-B-16 55 432 beschrieben.

Schließlich sind noch sogenannte Anfahrschlupfregelungen bekannt geworden, bei denen ein Durchdrehen der Räder eines Kraftfahrzeuges beim Anfahren mit zu hohem Motormoment dadurch verhindert wird, daß die Radbremsen der durchdrehenden Räder selektiv angesteuert werden. Eine derartige Regelung ist beispielsweise in der DE-C-18 06 671 beschrieben.

Diesen bekannten Anlagen ist gemeinsam, daß die Bremskraft prinzipiell unabhängig vom Fahrwunsch geregelt wird. Die Regelung erfolgt in den genannten Fällen vielmehr ausschließlich in Abhängigkeit von vorgegebenen Fahrzeugdaten (lastabhängige Regelung) oder vom Erreichen bestimmter Fahrzustände (Antiblockiersystem, Anfahrschlupfregelung), so daß der individuelle Fahrerwunsch keine Berücksichtigung findet.

Beim üblichen Bremsen gibt der Fahrer eine bestimmte gewünschte Verzögerung des Kraftfahrzeuges vor. Dieser Fahrerwunsch wird gesteuert in eine Bremskraft umgesetzt und die Auswirkung der Bremskraft in Gestalt einer tatsächlichen Verzögerung wird über einen Regelkreis zurückgemeldet, in den der Fahrer mit einbezogen ist. Aus der tatsächlichen Auswirkung der von ihm vorgegebenen Bremskraft ermittelt der Fahrer, ob die eingestellte Bremskraft ausreicht oder ob sie erhöht bzw. vermindert werden muß. Diese Einbeziehung des Fahrers in den Regelkreis stellt jedoch eine Belastung des Fahrers zusätzlich zur immer erforderlichen Beurteilung der allgemeinen Fahrsituation des Kraftfahrzeuges dar.

Es ist zur Vermeidung dieses Nachteils auch schon bekannt (DE-A-29 26 017 und US-A-3 131 975), bei einer Bremskraftregelanlage mit dem Bremspedal einen Sollwert einer Fahrzustandsgröße, z. B. der Fahrzeugverzögerung oder des Radschlupfs vorzugeben und einen Bremsregler vorzusehen, der den Bremsdruck entsprechend dieser Vorgabe regelt. Dabei kann die Bremsdruckzumessung an den Achsen in Abhängigkeit von den Achslasten erfolgen.

Die erfindungsgemäße Bremskraftregelanlage mit den Merkmalen des Patentanspruchs 1 verbessert die Wirkungsweise der oben erwähnten bekannten Bremskraftregelanlage.

Weitere Vorteile ergeben sich aus der Beschreibung und der beigefügten Zeichnung.

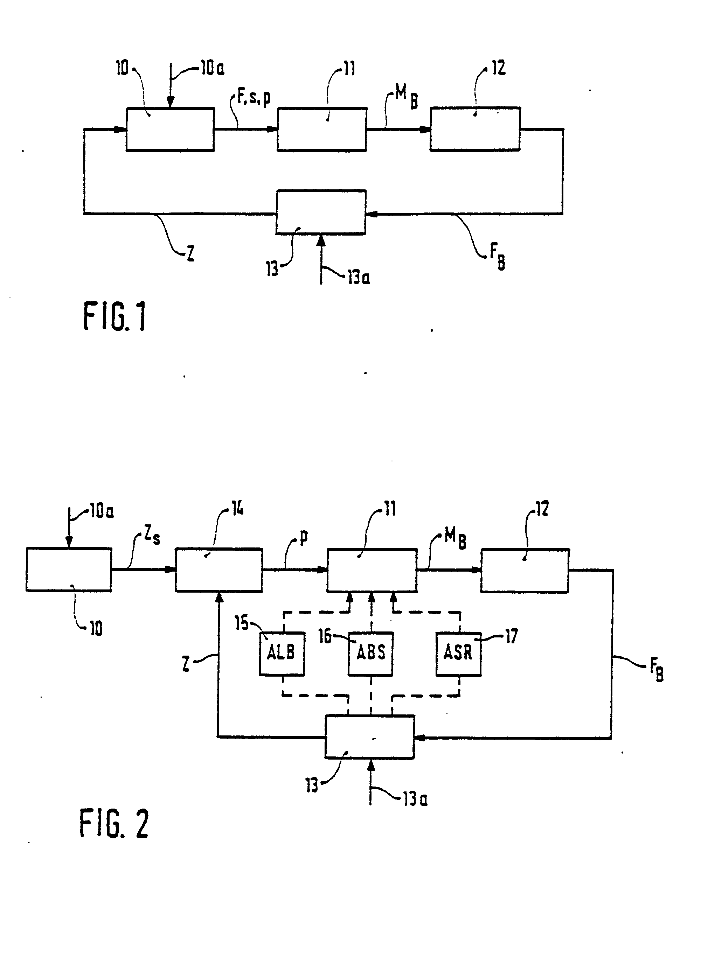

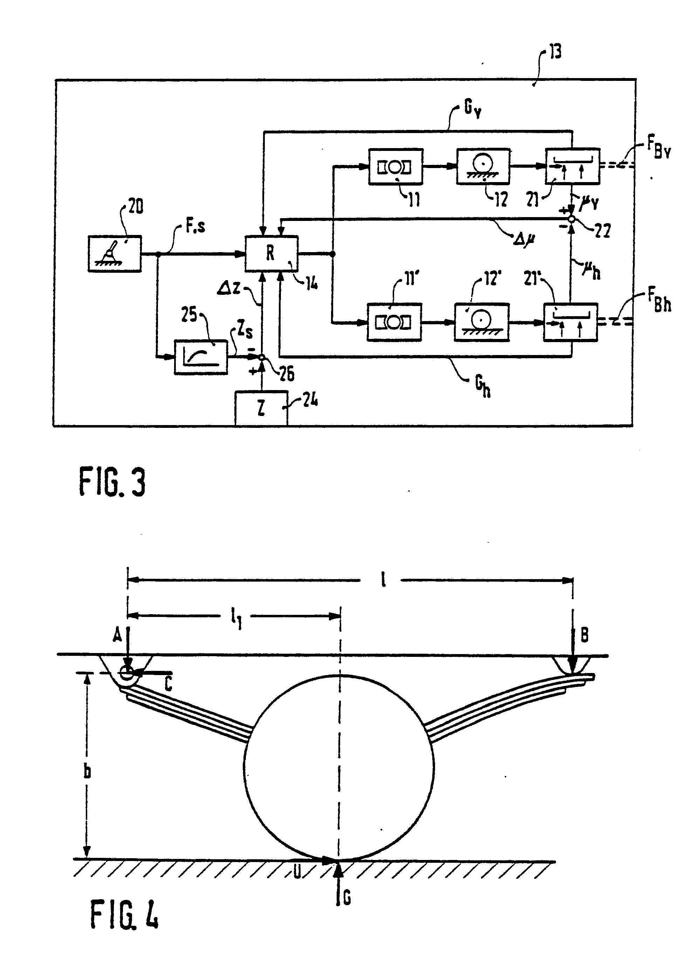

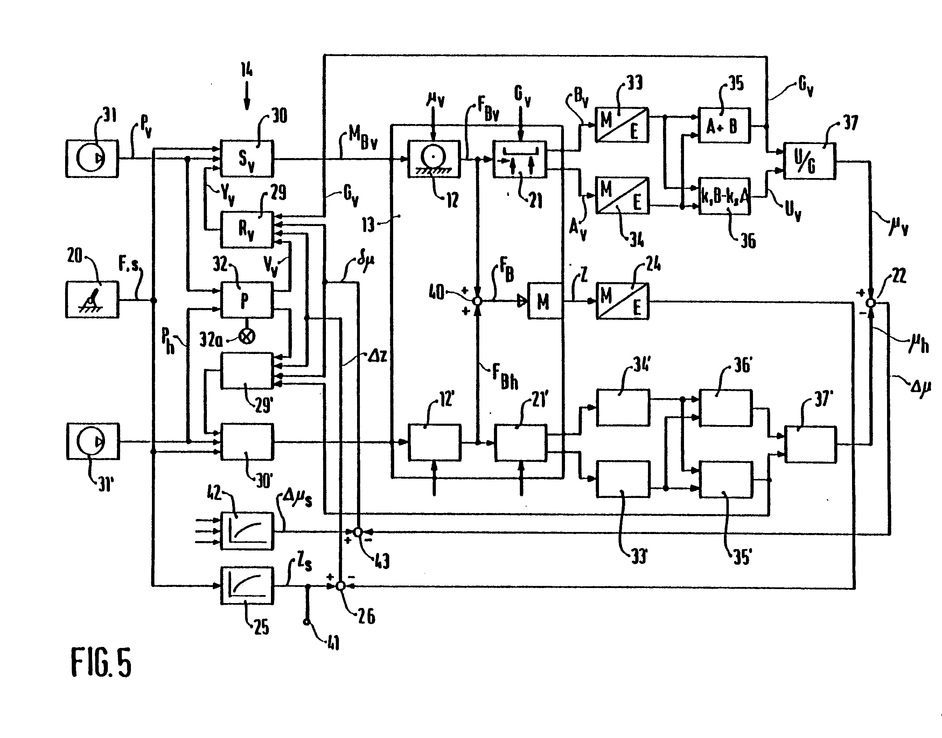

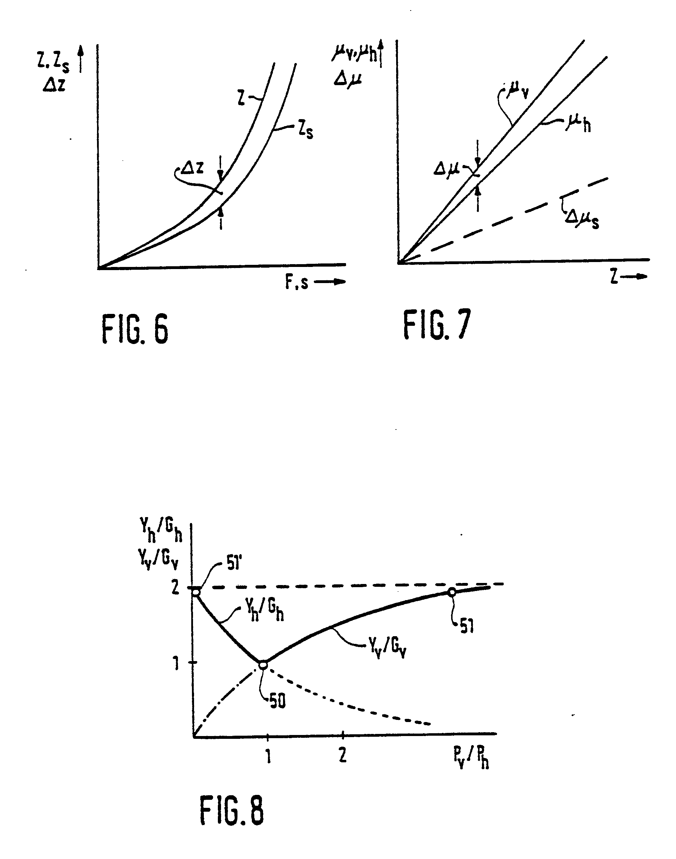

Die Erfindung ist in der Zeichnung dargestellt und wird in der nachfolgenden Beschreibung näher erläutert. Es zeigen Figur 1 eine Prinzipdarstellung eines Bremsregelkreises nach dem Stand der Technik ohne Bremsregler, Figur 2 eine Prinzipdarstellung eines Bremsregelkreises nach dem Stand der Technik unter Verwendung eines Reglers ; Figur 3 ein vereinfachtes Blockschaltbild einer Ausführungsform einer erfindungsgemäßen Bremskraftregelanlage ; Figur 4 eine schematische Darstellung zur Erläuterung der an einem Rad bzw. einer Radaufhängung wirksamen Kräfte ; Figur 5 ein vollständiges Blockschaltbild einer Ausführungsform einer erfindungsgemäßen Bremskraftregelanlage ; Figuren 6 bis 8 Diagramme über Kraftschluß, Verzögerung und Bremskraftverteilung zur Erläuterung des in Figur 5 dargestellten Blockschaltbildes.

Bei dem in Figur 1 dargestellten Regelkreis ist mit 10 der Fahrer eines Kraftfahrzeuges bezeichnet, der mit einer Betätigungskraft F oder und einem Betätigungsweg s einen Bremsdruck p vorgibt. Die angesteuerte Bremse 11 übt ein Bremsmoment $M_B$ auf ein Rad 12 aus, wodurch eine Bremskraft $F_B$ auf das Fahrzeug 13 ausgeübt wird. Die Bremskraft $F_B$ macht sich in einer Verzögerung Z bemerkbar, die wiederum vom Fahrer 10 wahrgenommen wird. Während nun einerseits auf den Fahrer 10 eine Fahrsituation 10a einwirkt, ist das Fahrzeug 13 Störgrößen 13a ausgesetzt, beispielsweise von der Straße, vom Fahrzeug selbst oder dgl. Möchte der Fahrer nun im Hinblick auf eine bestimmte Fahrsituation 10a bremsen, gibt er eine der Größen F, s und damit p vor und prüft, ob die sich einstellende Verzögerung Z der Fahrsituation 10a entspricht. Dabei sind außerdem die Störgrößen 13a zu berücksichtigen, beispielsweise Fahrbahnglätte, Fahrzeugbeladung und dgl. Bei einer derartigen Bremsung ist der Fahrer 10 damit immer in den Regelkreis eingeschaltet, so daß er einen Teil seiner Aufmerksamkeit der Regelung der Verzögerung Z zur Verfügung stellt.

Demgegenüber ist bei der Regelung gemäß Figur 2 ein gesonderter Bremsregler 14 vorgesehen, in dem die vom Fahrer 10 vorgegebene Größe mit der tatsächlich sich einstellenden Größe verglichen wird und die Bremse 11 in einem geschlossenen Regelkreis in der Weise eingestellt wird, daß sich die vom Fahrer vorgegebene Größe tatsächlich einstellt. Gibt der Fahrer beispielsweise eine Sollverzögerung $Z_S$ vor, wird

im Regler 14 die Abweichung der tatsächlichen Verzögerung Z von der Soll-Verzögerung $Z_S$ festgestellt und in Abhängigkeit von dieser Differenz die Bremse 11 betätigt.

Es sind bereits selbsttätige Bremskraftregelanlagen bekannt, beispielsweise lastabhängige Bremskraftregler (ALB) 15, Antiblockiersysteme (ABS) 16 oder Anfahrschlupfregelungen (ASR) 17.

Bei dem in Figur 3 dargestellten vereinfachten Blockschaltbild ist das Modell einer erfindungsgemäßen Regelung veranschaulicht. Das Fahrzeug ist wiederum mit 13 bezeichnet und weist ein Bremspedal 20 auf, das auf den Regler 14 einwirkt. Der Regler 14 steuert eine zweiachsige Bremsanlage, bestehend aus den Bremsen 11, 11', den Rädern 12, 12' sowie jeweils zugehörigen Aufhängungen 21, 21'. In den Aufhängungen 21, 21', die die Bremskräfte $F_{Bv}$, $F_{Bh}$ auf das Fahrzeug 13 übertragen, wird der jeweilige Kraftschluß $\mu_v$, $\mu_h$ ermittelt und in einem ersten Summenpunkt 22 die Kraftschlußdifferenz $\Delta \mu$ ermittelt, die ebenfalls dem Bremsregler 14 zugeführt wird. Gleiches gilt für in den Aufhängungen 21, 21' ermittelte Achslasten $G_v$ bzw. $G_h$. Die Stellung des Bremspedals 20 wird in einer ersten Sollwertstufe 25 in eine Soll-Verzögerung $Z_s$ umgesetzt, die in einem zweiten Summenpunkt 26 mit der Ist-Verzögerung Z verglichen wird, die über einen Fahrzeugverzögerungs-Geber 24 oder über RaddrehzahlGeber mit nachgeschalteten Differenzierstufen ermittelt wird.

Die Wirkungsweise der in Figur 3 dargestellten Anlage ist wie folgt:

Während vom Bremspedal 20 eine Größe F bzw. s lediglich als Grundgröße für den Bremsregler 14 vorgegeben wird, wird die eigentliche Bremsregelung über den zweiten Summenpunkt 26 vorgenommen, in dem der Verzögerungs-Sollwert mit dem Istwert verglichen wird. Dabei ist es selbstverständlich auch möglich, auf die direkte Beeinflussung des Bremsreglers 14 durch das Bremspedal 20 zu verzichten und den Bremsregerl 14 lediglich in Abhängigkeit von der Differenz $\Delta z$ der Verzögerungswerte anzusteuern. Zusätzlich wird eine achsweise lastabhängige Regelung über die Größen $G_v$, $G_h$ vorgenommen. Schließlich wird über den ersten Summenpunkt 22 die Bremskraft an den Achsen, beispielsweise der Vorder- und Hinterachse in der Weise eingestellt, daß sich eine vorbestimmte Differenz $\Delta \mu$ des Kraftschlusses an Vorder- und Hinterachse einstellt.

In Figur 4 sind die Horizontalkraft C und die Vertikalkräfte A, B einer Aufhängung sowie die Horizontalkraft U und die Vertikalkraft G, die auf ein Rad eines Kraftfahrzeuges einwirken, dargestellt. Da die Summe der horizontalen Kräfte gleich Null ist, gilt:

$$C - U = 0$$

Da die Summe der vertikalen Kräfte gleich Null ist gilt:

$$A + B - G = 0$$

Da die Summe der Momente ebenfalls gleich Null ist, gilt schließlich:

$$BI - GI_1 - Ub = 0$$

Wie man leicht sieht, ergibt dies für die Horizontalkraft U am Rad:

$$U = B (I - I_1)/b - A I_1/b$$

Das Maß b ist durch das Einfederungsgesetz bekannt.

Damit kann bei bekannter Geometrie I, $I_1$, b der Aufhängung bzw. des Rades und bei Kenntnis der Vertikalkräfte, A, B die Horizontalkraft U am Rad ermittelt werden. Die Achslast G ergibt sich dabei in einfacher Weise aus der Summe der Vertikalkräfte A und B. Die am Rad wirkenden Kräfte U, G lassen sich folglich durch Kraftmessung in der Aufhängung (A, B) oder (A, C) oder an anderen Stellen zwischen Einleitung und Abstützung ermitteln.

Die vorstehenden Überlegungen werden bei einer Bremskraftregelanlage ausgenutzt, wie sie schematisch in Figur 5 dargestellt ist. Diese Bremskraftregelanlage ist wieder für zwei Achsen, beispielsweise eine Vorderachse (Index : v) und eine Hinterachse (Index : h) ausgelegt, wobei die Elemente der Hinterachse der Übersichtlichkeit halber nur schematisch dargestellt sind und im nachfolgenden nicht näher erläutert werden, da ihre Funktion vollkommen der der Vorderachse entspricht.

Eingangsseitig wirkt auf die Regelanlage das Bremspedal 20 sowie eine Druckquelle 31, die auf ein Stellglied 30 einwirken, das weiterhin von einer Regelstufe 29 beaufschlagt ist. Das Bremspedal 20 liefert eine Ausgangsgröße F bzw. s, die Druckquelle 31 liefert einen Versorgungsdruck $P_v$ und die Regelstufe 29 erzeugt eine Regelgröße $Y_v$. Vom Stellglied 30 wird ein Bremsmoment $M_{Bv}$ vorgegeben, das auf das Rad 12 des Fahrzeuges 13 einwirkt. Weiterhin wirkt auf das Rad 12 der Kraftschluß $\mu_v$, so daß sich insgesamt eine Bremskraft $F_{Bv}$ ergibt, die ihrerseits, ebenso wie die Achslast $G_v$ auf die Aufhangung 21 des Fahrzeuges 13 einwirkt. Die Bremskrafte $F_{Bv}$ der Vorderachse bzw. $F_{Bh}$ der Hinterachse addieren sich in der modellhaften Betrachtung in einem dritten Summenpunkt 40 und wirken als Gesamtbremskraft $F_B$ auf die Masse M des Fahrzeuges 13, so daß sich eine Verzögerung Z einstellt, die in dem Fahrzeugverzögerungs-Geber 24 in ein elektrisches Signal umgeformt wird.

Wahrend die Größen $\mu_v$, $G_v$ gedachte Größen sind, die in der modellhaften Vorstellung auf das Fahrzeug 13 einwirken, werden die Vertikalkräfte $A_v$, $B_v$ in einem ersten und einem zweiten Lastgeber 33, 34 in entsprechende elektrische Signale zur weiteren Auswertung umgeformt. Diese Auswertung erfolgt einmal in einer ersten Rechenstufe 35 in der die vertikalen Kräfte $A_v$, $B_v$ addiert werden, so daß am Ausgang die Achslast $G_v$ liegt. Andererseits wird in einer zweiten Rechenstufe 36 über die oben abgeleitete Beziehung aus den Vertikalkraften $A_v$, $B_v$ die Horihontalkraft $U_v$ am Rad ermittelt. Die Achslast $G_v$ wird nun einmal der Regelstufe 29 und zum anderen zusammen

mit der Horizontalkraft $U_v$ einer Dividierstufe 37 zugeführt, in der der Kraftschluß $\mu_v$ aus dem Quotienten von Horizontal- und Vertikalkraft ermittelt wird. Die Werte $\mu_v$, $\mu_h$ des Kraftschlusses beider Achsen werden im ersten Summenpunkt 22 miteinander verglichen. Der am Ausgang des ersten Summenpunktes 22 anstehende Differenzwert $\Delta\mu$ wird mit einem in einer zweiten Sollwertstufe 42 erzeugten Differenz-Sollwert $\Delta\mu_s$ in einem vierten Summenpunkt 43 verglichen und die Abweichung $\delta\mu$ wird den Regelstufen 29, 29' zugeführt.

Der tatsächliche Verzögerungswert Z vom Fahrzeugverzögerungs-Geber 24 wird — wie bereits oben zu Figur 3 erläutert — im zweiten Summenpunkt 26 mit dem Sollwert $Z_s$ verglichen und die Abweichung wird ebenfalls den Regelstufen 29, 29' zugeführt. Der Sollwert $Z_s$ ist dabei ferner auf eine Klemme 41 gelegt, über die weitere Funktionen des Kraftfahrzeuges steuerbar sind.

Schließlich ist noch eine Prüfstufe 32 vorgesehen, der die Druckwerte $P_v$, $P_h$ der Druckquellen 31, 31' zuführbar sind. Die Prüfstufe 32 erzeugt ein Signal $V_v$, das als viertes Eingangssignal der Regelstufe 29 zugeführt wird.

Die Wirkungsweise der in Figur 5 dargestellten Anordnung soll nun nachstehend anhand der Figuren 6 bis 8 erläutert werden.

In Figur 6 ist über der Betätigungsgröße des Bremspedals 20, beispielsweise einer Kraft F oder eines Weges s der jeweils zugehörige Sollwert $Z_s$ der Fahrzeugverzögerung dargestellt. Stellt sich eine tatsächliche Fahrzeugverzögerung Z ein, ergibt sich eine Abweichung von beispielsweise $\Delta z$, die vom zweiten Summenpunkt 26 auf die Regelstufen 29, 29' derart einwirkt, daß die Bremskrafte $F_{Bv}$, $F_{Bh}$ verändert werden, so daß die Gesamtbremskraft $F_B$ je nach Vorzeichen von $\Delta z$ gesenkt oder gesteigert wird.

In Figur 7 ist über der Verzögerung Z der Kraftschluß $\mu_v$, $\mu_h$ an Vorder- und Hinterachse dargestellt. Die sich einstellende Abweichung $\Delta\mu$ wird im ersten Summenpunkt 22 ermittelt und kann in dem vierten Summenpunkt 43 mit einem Sollwert $\Delta\mu_s$ verglichen werden, so daß die resultierende Abweichung $\delta\mu$ auf die Regelstufen 29, 29' derart einwirken kann, daß das Bremskraftverhältnis, d. h. der Quotient $F_{Bv}/F_{Bh}$ gesenkt oder gesteigert wird. Dabei ist es selbstverständlich möglich, für verschiedene Verzögerungen Z unterschiedliche Sollwerte $\Delta\mu_s$ der Kraftschlußdifferenz anzugeben, wie dies in Figur 7 gestrichelt als Beispiel dargestellt ist. Durch Vorgabe eines bestimmten Verlaufes von $\Delta\mu_s$ kann dabei verschiedenen Fahrzeugkonfigurationen oder Bereifungen Rechnung getragen werden. Der Sollwert $\Delta\mu_s$ kann dabei, wie bei 42 in Figur 5 angedeutet, auch von verschiedenen Parametern beeinflußt werden, etwa vom Ladezustand oder dgl.

Anhand von Figur 8 soll schließlich noch die Wirkungsweise der Prüfstufe 32 veranschaulicht werden. Die Prüfstufe 32 hat die Aufgabe, durch Ansteuerung der Regelstufen 29, 29' in den Fällen wirksam zu werden, in denen erhebliche Abweichungen der Druckwerte $P_v$, $P_h$ der Druckquellen 31, 31' auftreten und die verlangte Verzögerung mit der normalen Bremskraftzumessung nicht erreicht wird. Ist beispielsweise die Druckquelle 31' defekt und wird $P_h = 0$, stellt die Prüfstufe 32 den Faktor $V_v$ so ein, daß über die Regelgröße $Y_v$ und das Stellglied 30 ein Bremsmoment $M_{Bv}$ eingestellt wird, das beispielsweise der doppelten Achslast $G_v$ proportional ist, wie dies mit 51 in Figur 8 angedeutet ist, während bei normalem Betrieb, in dem $P_v = P_h$ ist, das Bremsmoment der einfachen Achslast $G_v$ proportional ist, wie dies in Figur 8 mit 50 angedeutet ist. Die Prüfstufe 32 steuert damit eine Bremskraftübernahme durch eine Achse dann ein, wenn die Druckversorgung an der anderen Achse zu gering ist. Eine Anzeige 32a zeigt ein Absinken des Versorgungsdruckes an.

## Patentansprüche

1. Bremskraftregelanlage für Kraftfahrzeuge mit einem Betätigungsorgan, vorzugsweise einem Bremspedal (20), einem Bremsregler (29) zum Einstellen des Bremsmomentes ($M_B$) an den Rädern (12) des Kraftfahrzeuges (13) und mit wenigstens einem Geber (24) zum Erfassen von Fahrzustandsgrößen, wobei vom Betätigungsorgan (20) ein kontinuierlicher Sollwert einer Fahrzustandsgröße vorgebbar ist und der Bremsregler (29) in Abhängigkeit von der Differenz des Soll- und Istwerts den Bremsdruck regelt, und wobei in Abhängigkeit von Achslasten die Bremsdruckzumessung an den Achsen erfolgt, dadurch gekennzeichnet, daß weitere Geber (33, 34 ; 33', 34') die horizontalen und vertikalen Kräfte (A, B, C) an den Radaufhängungen (21, 21') des Kraftfahrzeuges (13) erfassen und daß Rechenstufen (35, 36, 37 ; 35', 36, 37') zur Bestimmung der an den Rädern (12, 12') angreifenden Horizontal- und Vertikalkräfte (U, G) sowie dessen Kraftschlusses ($\mu_v$, $\mu_h$) an den Achsen des Kraftfahrzeuges vorgesehen sind und daß die Differenz des Kraftschlusses ($\Delta\mu$) an den Achsen gebildet und die Abweichung ($\delta\mu_s$) zur achsweisen Bremsdruckregelung dient.

2. Bremskraftregelanlage nach Anspruch 1, dadurch gekennzeichnet, daß der Sollwert ($Z_s$) die Verzögerung (Z) des Kraftfahrzeuges ist.

3. Bremskraftregelanlage nach Anspruch 1, dadurch gekennzeichnet, daß der Sollwert ($S_s$) der Schlupf (S) wenigstens eines Fahrzeugrades (12) ist.

4. Bremskraftregelanlage nach einem der vorhergehenden Ansprüche, dadurch gekennzeichnet, daß eine Prüfstufe (32) zur Beeinflussung von achsweisen Regelstufen (29, 29') des Bremsreglers (14) vorgesehen ist, in der die Bremsdruckwerte ($P_v$, $P_h$) der Versorgung (31, 31') für die achsweisen Stellglieder (30, 30') des Bremsreglers (14) verglichen werden und bei Absinken dieser Bremsdruckwerte ($P_v$, $P_h$) für eine Achse das an der jeweils anderen Achse wirksame Bremsmoment ($M_B$) erhöht wird und das Absinken des Versorgungsdruckes angezeigt wird.

## Claims

1. Brake power control system for motor vehicles with an operating element, preferably a brake pedal (20), a brake controller (29) for setting the braking torque ($M_B$) at the wheels (12) of the motor vehicle (13) and with at least one pickup (24) for the recording of driving parameters, it being possible to use the operating element (20) to preselect a continuous setpoint of a driving parameter and the brake controller (29) controlling the brake pressure as a function of the difference between setpoint and actual value, and the apportionment of brake pressure at the axles taking place as a function of axle loads, characterized in that further pickups (33, 34 ; 33', 34') record the horizontal and vertical forces (A, B, C) at the wheel suspensions (21, 21') of the motor vehicle (13), and in that computation stages (35, 36, 37 ; 35', 36', 37') are provided for determination of the horizontal and vertical forces (U, G) acting at the wheels (12, 12') and their adhesion ($\mu_v$, $\mu_h$) at the axles of the motor vehicle, and in that the difference in the adhesion ($\Delta\mu$) at the axles is formed and is used as the deviation ($\mu_s$) for axle brake pressure control.

2. Brake power control system according to Claim 1, characterized in that the setpoint ($Z_s$) is the deceleration (Z) of the motor vehicle.

3. Brake power control system according to Claim 1, characterized in that the setpoint ($S_s$) is the slip (S) of at least one vehicle wheel (12).

4. Brake pressure control system according to one of the preceding claims, characterized in that a test stage (32) is provided for influencing axle control stages (29, 29') of the brake controller (14) and in which the brake pressure values ($P_v$, $P_h$) of the supply (31, 31') for the final axle control elements (30, 30') of the brake controller (14) are compared and, if these brake pressure values ($P_v$, $P_h$) drop for one axle, the braking torque ($M_B$) effective at the respective other axle is increased and the drop in the supply pressure is indicated.

## Revendications

1. Dispositif de régulation de la puissance de freinage pour véhicules motorisés comportant un organe de manœuvre, de préférence une pédale de frein (20), un régulateur de freinage (29) pour prescrire le moment de freinage ($M_B$) agissant sur les roues (12) du véhicule motorisé (13) et comportant au moins un émetteur (24) pour saisir les grandeurs relatives aux conditions de marche du véhicule, étant précisé que l'organe de manœuvre (20) peut prescrire une valeur de consigne continue d'une grandeur relative aux conditions de marche du véhicule et que le régulateur de freinage (29) fait sa régulation en fonction de la difference entre la valeur de consigne et la valeur réelle de la pression de freinage, et étant précisé qu'il se fait un accroissement de pression de freinage aux essieux en fonction des charges sur les essieux, dispositif caractérisé en ce que d'autres émetteurs (33, 34 ; 33', 34') saisissent les forces horizontales et verticales (A, B, C) agissant sur les suspensions (21, 21') des roues du véhicule motorisé (13) ; et en ce qu'il est prévu des étages de calcul (35, 36, 37 ; 35', 36', 37') pour déterminer les forces horizontales et verticales (U, C) qui s'exercent sur les roues (12, 12'), ainsi que leur résultante ($\mu_v$, $\mu_h$) qui s'exerce sur les essieux du véhicule ; et en ce que l'on forme la différence ($\Delta\mu$) de la résultante des forces qui s'exercent sur les essieux et en ce que c'est l'écart ($\delta\mu_s$) qui sert à la régulation de la pression de freinage par essieu.

2. Dispositif de régulation de force de freinage selon la revendication 1, caractérisé en ce que la valeur de consigne ($Z_s$) est la décélération (Z) du véhicule.

3. Dispositif de régulation de la force de freinage selon la revendication 1, caractérisé en ce que la valeur de consigne ($S_s$) est le patinage (S) d'au moins une roue du véhicule (12).

4. Dispositif de régulation de la force de freinage selon l'une des revendications précédentes, caractérisé en ce qu'il est prévu, pour influencer les étages de régulation (29, 29') par essieu du régulateur de freinage (14), un étage de contrôle (32) dans lequel les valeurs de la pression de freinage ($P_v$, $P_h$) de l'alimentation (31, 31') pour les organes de positionnement (30, 30'), par essieu, du régulateur de freinage (14) sont comparées et dans lequel, en cas d'abaissement de ces valeurs de pression de freinage ($P_v$, $P_h$) pour un essieu, le moment de freinage ($M_B$) qui agit respectivement sur l'autre essieu augmente, l'abaissement de la pression d'alimentation étant signalé.

10 — 10a

F,s,p    11    M_B    12

Z

13 — 13a    F_B

# FIG.1

10a    14    11    12

Z_s    P    M_B

10

15 — ALB    16 — ABS    ASR — 17

Z    F_B

13 — 13a

# FIG. 2

FIG. 3

FIG. 4

FIG.5

FIG. 6

FIG. 7

FIG. 8